# EUROPÄISCHE PATENTSCHRIFT

(11) **EP 0 883 254 B1**
(45) Veröffentlichungstag und Bekanntmachung des Hinweises auf die Patenterteilung: **25.05.2005**
(21) Anmeldenummer: 98440116.6
(22) Anmeldetag: 02.06.1998
(51) Int. Cl.: H04B 10/158

(54) **Empfänger zum Empfang von optischen Signalen**
Receiver for receiving optical signals
Récepteur pour réception de signaux optiques

(30) Priorität: 03.06.1997 DE 19723103; 05.11.1997 DE 19748756; 05.03.1998 DE 19809366
(43) Veröffentlichungstag der Anmeldung: 09.12.1998
(73) Patentinhaber: ALCATEL, 75008 Paris (FR)
(72) Erfinder: Pfeiffer, Thomas, Dr., 70569 Stuttgart (DE)
(74) Vertreter: Schätzle, Albin, Dipl.-Phys.

(56) Entgegenhaltungen:
- EP-A- 0 763 907
- DE-A- 19 605 567
- MOELLER L: "AN OPTICAL CDMA METHOD BASED ON PERIODIC SPECTRUM ENCODING" PROCEEDINGS OF THE ANNUAL CONFERENCE ON EUROPEAN FIBRE OPTIC COMMUNICATIONS AND NETWORKS (EFOC), XX, XX, 27. Juni 1995 (1995-06-27), Seiten 178-181, XP000672568

## Beschreibung

Die Erfindung bezieht sich auf einen Empfänger zum Empfang von optischen Signalen aus einem optischen Übertragungsnetz zur Übertragung kodierter, gemultiplexter optischer Signale. Der Empfänger beinhaltet insbesondere ein Mittel zur Detektion der zu empfangenden optischen Signale und ein Verarbeitungsmittel zur Kompensation der in den detektierten optischen Signalen vorhandenen Störungen durch Kombination der detektierten optischen Signale mit Kompensationssignalen.

Ein solcher Empfänger ist beispielsweise bekannt aus Proceedings of the Thirteenth Annual Conference on European Fibre Optic Communications and Networks, Brighton, England, 1995, Seiten 178 bis 181. Es ist ein Empfänger für ein CDMA-System beschrieben, der zur Detektion der zu empfangenden optischen Signale ein periodisches Filter enthält, das die detektierten optischen Signale zu einer Photodiode weiterleitet, wo sie optisch/elektrisch umgesetzet werden. Zusätzlich ist ein optischer Koppler vorgesehen, der ein Teil der über das CDMA-Netz übertragenen optischen Signale auskoppelt und zu einer weiteren Photodiode weiterleitet. Die ausgekoppelten Signale dienen als Kompensationssignale, die nach der optisch/elektrischen Umsetzung zunächst gedämpft und anschließend dem negativen Eingang eines Differenzverstärkers zugeführt werden. Am positiven Eingang des Differenzverstärkers werden die elektrisch umgesetzten detektierten Signale angelegt. Die Kompensation von Störungen in den detektierten Signalen wird durch den Vergleich der detektierten Signale mit den Kompensationssignalen erreicht. Nachteilig wirkt sich aus, daß beim Vergleich in den Kompensationssignalen ebenfalls ein Teil der zu empfangenden optischen Signale enthalten ist, der beim Vergleich vom detektierten Signal subtrahiert wird, wodurch der Grad der Kompensation verschlechtert wird. Das Kompensationsverfahren ist nur für ein CDMA-System geeignet, in dem eine Vielzahl von optischen Sendern und Empfängern enthalten sind, da sich die Beeinträchtigung der Kompensation durch die Subtraktion des Teil des zu empfangenden Signals dann weniger stark auswirkt. Das Kompensationsverfahren ist somit umso uneffektiver, je kleiner die Finesse des periodischen Filters ist; die Finesse ist im Artikel näher erläutert und ist insbesondere umgekehrt proportional zur Bandbreite.

Eine Aufgabe der Erfindung ist es daher, einen Empfänger zu schaffen, der ein verbessertes Kompensationsverfahren hat und bereits für Systeme ab zwei Sendern geeignet ist.

Erfindungsgemäß wird diese Aufgabe durch einen Empfänger nach dem Patentanspruch 1 gelöst. Insbesondere ist der Empfänger dadurch gekennzeichnet, daß er ein Mittel aufweist, das geeignet ist, zu empfangende optische Signale zu transmittieren und nicht zu empfangende optische Signale zu reflektieren, und daß ein weiteres Mittel vorhanden ist, um zumindest aus einem Teil der reflektierten optischen Signale die Kompensationssignale abzuleiten und anschließend dem Verarbeitungsmittel zuzuführen.

Der erfindungsgemäße Empfänger weist den Vorteil auf, daß insbesondere das zu empfangende Signal nicht oder nur minimal im Kompensationssignal enthalten ist und daher bei der Kombination mit dem detektierten Signal den Grad der Kompensation nicht oder nur unwesentlich beeinträchtigt.

Als weiterer Vorteil ist anzusehen, daß in einer Ausführungsform ein Testsignal zusätzlich in einem Signalzweig eingebracht wird, um so eine noch gezieltere Kompenstion zu erreichen.

Vorteilhafte Ausgestaltungen sind den abhängigen Patentansprüchen zu entnehmen.

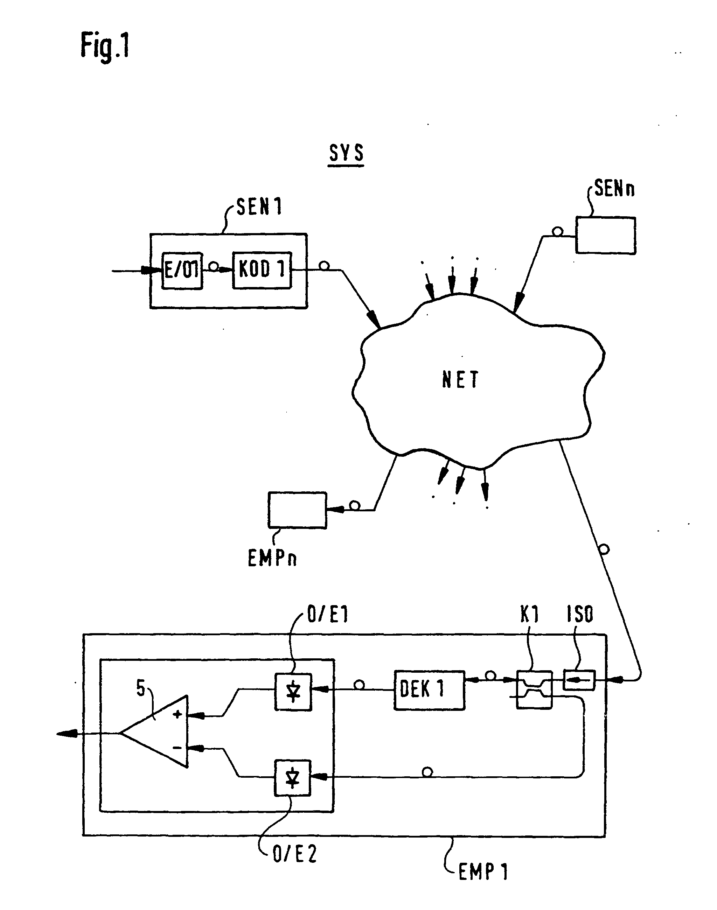

Ein Ausführungsbeispiel der Erfindung wird im folgenden unter Zuhilfenahme einer Figur beschrieben. Die Figur zeigt eine schematische Darstellung eines erfindungsgemäßen optischen Übertragungssystems SYS.

Das optische Übertragungssystem SYS beinhaltet mindestens zwei Sender SEN1, ... , SENn, mindestens einen Empfänger EMP1, ..., EMPn und ein optisches Übertragungsnetz NET, über das die optischen Signale der Sender SEN1, ..., SENn zu den Empfängern EMP1, ..., EMPn übertragen werden; n ist eine natürliche Zahl größer Eins. Das optische Übertragungsnetz NET ist z.B ein Mehrpunkt-zu-Mehrpunkt Netz aus optischen Übertragungsleitungen und optischen Splittern sowie ggf. optischen Verstärkern und dient zur Übertragung kodierter gemultiplexter optischer Signale. Jeder Sender SEN1, ..., SENn enthält einen Kodierer KOD1, in dem die zu übertragenden Signale vor ihrer Aussendung ins optische Übertragungsnetz NET kodiert werden. Die Kodierung erfolgt auf optischem Wege, z.B. durch Frequenzkodierung mittels eines optischen Filters. Jeder Empfänger EMP1, ..., EMPn, der die vom Sender SEN1 ausgesendeten optischen Signale empfangen will, muß einen Dekodierer DEK1 enthalten, der auf den Kodierer KOD1 des Senders SEN1 abgestimmt ist. Im einfachsten Fall sind die Frequenzbereiche, die für optische Signale durchlässig, und die Frequenzbereiche, die für optische Signale gesperrt sind, beim Kodierer KOD1 und beim Dekodierer DEK1, der z.B. auch ein optisches Filter beinhaltet, gleich. Vor der optischen Filterung werden die zu übertragenden elektrischen Signale z.B. in einem Elektrisch/Optisch-Umsetzer E/O1 in optische Signale umgesetzt, die anschließend gefiltert werden. Ein solches Kodierverfahren ist z.B. unter den Begriffen CDMA und Spead Spectrum bekannt; CDMA = Code Division Multiple Access, Spead Spectrum = Spreizspektrum.

Der Empfänger EMP1 beinhaltet ein Mittel DEK1 zur Detektion der zu empfangenden optischen Signale. Das Mittel ist ein Dekodierer DEK1, der auf den Kodierer des Senders abgestimmt ist, dessen optische Signale er empfangen will oder berechtigt ist zu empfangen. Als bevorzugte Ausführungsform des Mittels DEK1 ist ein periodisches optisches Filter und insbesondere ein Fabry-Perot Filter geeignet. Bei einem Fabry-Perot Filter werden zu empfangende optische Signale transmittiert und nicht zu empfangende optische Signale reflektiert.

Der Empfänger EMP1 beinhaltet ferner ein Verarbeitungsmittel O/E1, O/E2, 5 zur Kompensation der in den detektierten optischen Signalen vorhandenen Störungen durch Kombination der detektierten optischen Signale mit Kompensationssignalen. Insbesondere die gleichzeitige Aktivität mehrerer Sender SEN1, ..., SENn im optischen Übertragungsnetz NET führt zu Übersprechen der optischen Signale der Sender SEN2 bis SENn in den im Empfänger EMP1 zu empfangenden Kanal, der vom Sender SEN1 genutzt wird. In den detektierten Signalen sind somit auch Anteile an optischen Signalen der Sender SEN2 bis SENn enthalten, die sich als Störungen bemerkbar machen. Durch Kombination der detektierten optischen Signale mit Kompensationssignalen können die Störungen minimiert werden.

Der Empfänger EMP1 beinhaltet daher ein weiteres Mittel K1, um zumindest aus einem Teil der reflektierten optischen Signale die Kompensationssignale abzuleiten und anschließend dem Verarbeitungsmittel O/E1, O/E2, 5 zuzuführen. Als bevorzugte Ausführungsform für das weitere Mittel K1 ist eine optische Koppeleinrichtung vorgesehen und insbesondere ein sog. asymmetrischer Koppler, der aus einer optischen Übertragungsleitung z.B. 10% oder 20% der optischen Leistung auskoppelt.

Es ist eine optische Übertragungsleitung vorgesehen, um die über das optische Übertragungsnetz NET übertragenen optischen Signale dem Mittel DEK1 zuzuführen. Die vom Sender SEN1 zu übertragenden elektrischen Signale werden somit elektrisch/optisch umgesetzt, optisch frequenzkodiert, über das optische Übertragungsnetz NET zum Empfänger EMP1 übertragen und gelangen schließlich über die optische Übertragungsleitung zu dem Fabry-Perot Filter DEK1, das die zu empfangenden optischen Signale optisch frequenzdekodiert, transmittiert und über eine weitere optische Übertragungsleitung zum Verarbeitungsmittel O/E1, O/E2, 5 weiterleitet sowie die nicht zu empfangenden optischen Signale in die optische Übertragungsleitung, von der es die optischen Signale des Senders SEN1 empfangen hat, reflektiert.

In diese optische Übertragungsleitung ist das weitere Mittel K1 eingeschleift. Das weitere Mittel K1 beinhaltet eine optische Koppeleinrichtung, die die refelektierten optischen Signale entgegen der Ausbreitungsrichtung der über das optische Übertragungsnetz NET übertragenen optischen Signale zumindest teilweise aus der optischen Übertragungsleitung auskoppelt. Die ausgekoppelten optischen Signale stellen die Kompensationssignale dar, die über eine weitere optische Übertragungsleitung zum Verarbeitungsmittel O/E1, O/E2, 5 weitergeleitet werden. Diese Kompensationsignale beinhalten die optischen Signale des Senders SEN1 nicht bzw. nur in minimalen Anteilen, da diese vom Fabry-Perot Filter DEK1 transmittiert wurden. Die Kompensationssignale enthalten dann nur oder im wesentlichen nur optische Signale von Sender SEN2 bis SENn, die aktiv sind, d.h. optische Signale aussenden.

Der Auskoppelfaktor der optischen Koppeleinrichtung K1 ist bevorzugt derart festgelegt ist, daß die optische Leistung der ausgekoppelten reflektierten Signale dem Mittelwert der optischen Leistung der transmittierten Signale entspricht. Dadurch wird erreicht, daß dem Verarbeitungsmittel O/E1, O/E2, 5 optische Signale mit einem definierten Verhältnis der optischen Leistungen der optischen Signale zugeführt werden, so daß eine Kombination der Signale vereinfacht wird.

Werden z.B. nur 20% der optischen Leistung durch die optische Koppeleinrichtung K1 ausgekoppelt so verbleiben 80% der optischen Leistung in der optischen Übertragungsleitung, die mit dem optischen Übertragungsnetz NET verbunden ist. Diese 80% gelangen dann ins optische Übertragungsnetz NET. Um dies zu verhindern kann ein optischer Isolator ISO vorgesehen werden, der derart in die optische Übertragungsleitung eingeschleift ist, daß er nur für die optischen Signale aus dem optischen Übertragungsnet NET durchlässig ist und die nicht ausgekoppelten 80% der reflektierten Signale sperrt. Alternativ können auch 100% der reflektierten optischen Signale ausgekoppelt werden und über ein nicht dargestelltes Dämpfungsglied, das zwischen optischer Koppeleinrichtung K1 und dem Verarbeitungsmittel O/E1, O/E2, 5 eingefügt werden kann, die nötige Pegelanpassung erfolgen. Die Pegelanpassung kann auch durch ein elektrisches Dämpfungsglied im Verarbeitungsmittel O/E1, O/E2, 5 erfolgen.

Das Verarbeitungsmittel O/E1, O/E2, 5 beinhaltet einen ersten Optisch/Elektrisch-Umsetzer O/E1 zur Umsetzung der transmittierten optischen Signale in erste elektrische Signale, einen zweiten Optisch/Elektrisch-Umsetzer O/E2 zur Umsetzung der optischen Kompensationssignale in zweite elektrische Signale und einen Differenzverstärker 5, um die ersten und zweiten elektrischen Signale miteinander zu vergleichen.

Die Optisch/Elektrisch-Umsetzer O/E1 und O/E2 können beispielswweise durch eine Photodiode realisiert sein. Der Differenzverstärker 5 ist beispielsweise ein Operationsverstärker 5 mit einem positiven und einem negativen Eingang.

Die transmittierten Signale, die in erste elektrische Signale umgesetzt wurden, werden dem positiven Eingang des Operationsverstärkers 5 zugeführt. Der Anteil der ausgekoppelten reflektierten Signale wird nach der optisch/elektrischen Umsetzung und ggf. einer optischen oder elektrischen Dämpfung zur Pegelanpassung dem negativen Eingang des Operationsverstärkers 5 zugeführt. Die Signalanpassung erfolgt derart, daß die Signalpegel der ersten und zweiten elektrischen Signale an den Eingängen des Operationsverstärkers 5 im Mittel gleiche Werte besitzen. Auf diese Weise werden ein Teil der reflektierten Signale von den detektierten Signalen subtrahiert, wodurch eine Kompensation der Störungen in den detektierten Signalen auftritt. Am Ausgang des Operationsverstärkers 5 stehen somit kompensierte elektrische Signale zu Verfügung, die im Idealfall den dem Sender SEN1 zur Übertragung zugeführten elektrischen Signale entsprechen.

## Patentansprüche

1. Empfänger ( EMP1 ) zum Empfang von optischen Signalen aus einem optischen Übertragungsnetz ( NET ) zur Übertragung kodierter, gemultiplexter optischer Signale, mit einem Mittel ( DEK1 ) zur Detektion der zu empfangenden optischen Signale und einem Verarbeitungsmittel ( O/E1, O/E2, 5 ) zur Kompensation der in den detektierten optischen Signalen vorhandenen Störungen durch Kombination der detektierten optischen Signale mit Kompensationssignalen,
**dadurch gekennzeichnet, daß** das Mittel ( DEK1 ) geeignet ist, zu empfangende optische Signale zu transmittieren und nicht zu empfangende optische Signale zu reflektieren, und daß ein weiteres Mittel ( K1 ) vorhanden ist, um zumindest aus einem Teil der reflektierten optischen Signale die Kompensationssignale abzuleiten und anschließend dem Verarbeitungsmittel ( O/E1, O/E2, 5 ) zuzuführen.

2. Empfänger ( EMP1 ) nach Anspruch 1, **dadurch gekennzeichnet, daß** eine optische Übertragungsleitung vorgesehen ist, um die übertragenen optischen Signale dem Mittel ( DEK1 ) zuzuführen, und daß das weitere Mittel ( K1 ) eine optische Koppeleinrichtung beinhaltet, die in die optische Übertragungsleitung eingeschleift ist und die geeignet ist, die reflektierten optischen Signale entgegen der Ausbreitungsrichtung der übertragenen optischen Signale zumindest teilweise aus der optischen Übertragungsleitung auszukoppeln.

3. Empfänger ( EMP1 ) nach einem der vorherigen Ansprüche, **dadurch gekennzeichnet, daß** das Mittel ( DEK1 ) ein periodisches optisches Filter beinhaltet.

4. Empfänger ( EMP1 ) nach einem der vorherigen Ansprüche, **dadurch gekennzeichnet, daß** das Mittel ( DEK1 ) ein Fabry-Perot Filter beinhaltet.

5. Empfänger ( EMP1 ) nach einem der vorherigen Ansprüche, **dadurch gekennzeichnet, daß** das Verarbeitungsmittel ( O/E1, O/E2, 5 ) einen ersten Optisch/Elektrisch-Umsetzer ( O/E1 ) zur Umsetzung der transmittierten optischen Signale in erste elektrische Signale, einen zweiten Optisch/Elektrisch-Umsetzer ( O/E2 ) zur Umsetzung der optischen Kompensationssignale in zweite elektrische Signale und einen Differenzverstärker ( 5 ) beinhaltet, um die ersten und zweiten elektrischen Signale miteinander zu vergleichen.

6. Empfänger ( EMP1 ) nach Anspruch 2 und 5, **dadurch gekennzeichnet, daß** der Auskoppelfaktor derart festgelegt ist, daß die Signalpegel der ersten und zweiten elektrischen Signale im Mittel gleiche Werte besitzen.

7. Empfänger ( EMP1 ) nach einem der vorherigen Ansprüche, **dadurch gekennzeichnet, daß** ein optischer Isolator ( ISO ) vorgesehen ist, der derart in die optische Übertragungsleitung eingeschleift ist, daß er nur für die optischen Signale aus dem optischen Übertragungsnet ( NET ) durchlässig ist und die nicht ausgekoppelten, reflektierten Signale sperrt.

## Claims

1. A receiver (EMP1) for receiving optical signals from an optical communications network (NET) for transmitting coded, multiplexed optical signals, comprising a means (DEK1) for detecting the optical signals to be received and processing means (O/E1, O/E2, 5) for compensating noise present in the detected optical signals by combining the detected optical signals with compensation signals,
**characterized in that** the means (DEK1) is adapted to pass optical signals to be received and reflect optical signals not to be received, and that a further means (K1) is provided for deriving the compensation signals from at least part of the reflected optical signals and then applying them to the processing means (O/E1, O/E2, 5).

2. A receiver (EMP1) as claimed in claim 1, **characterized in that** an optical transmission line is provided for feeding the transmitted optical signals to the means (DEK1), and that the further means (K1) comprises an optical coupling device inserted in the optical transmission line and adapted to remove at least part of the reflected optical signals from the optical transmission line in a direction opposite to the propagation direction of the transmitted optical signals.

3. A receiver (EMP1) as claimed in either of the preceding claims, **characterized in that** the means (DEK1) comprises a periodic optical filter.

4. A receiver (EMP1) as claimed in any one of the preceding claims, **characterized in that** the means DEK1) comprises a Fabry-Perot filter.

5. A receiver (EMP1) as claimed in any one of the preceding claims, **characterized in that** the processing means (O/E1, O/E2, 5) comprises a first optical-to-electrical converter (O/E1) for converting the passed optical signals into first electric signals, a second optical-to-electrical converter (O/E2) for converting the optical compensation signals into second electric signals, and a differential amplifier (5) for comparing the first and second electric signals.

6. A receiver (EMP1) as claimed in claims 2 and 5, **characterized in that** the coupling factor is chosen so that on an average, the levels of the first and second electric signals have equal values.

7. A receiver (EMP1) as claimed in any one of the preceding claims, **characterized in that** an optical isolator (ISO) is provided which is inserted into the optical transmission line in such a way as to pass the optical signal from the optical communications network (NET) and block those of the reflected signals which were not removed.

## Revendications

1. Récepteur (EMP1) pour la réception de signaux optiques provenant d'un réseau de transmission optique (NET) pour la transmission de signaux optiques, multiplexés, codés, avec un moyen (DEK1) pour la détection des signaux optiques à recevoir et un moyen de traitement (O/E1, O/E2, 5) pour la compensation des perturbations présentes dans les signaux optiques détectés par combinaison des signaux optiques détectés avec des signaux des signaux de compensation,
**caractérisé en ce que** le moyen (DEK1) est approprié pour transmettre des signaux optiques à recevoir et réfléchir des signaux optiques qui ne sont pas à recevoir, et **en ce qu'**un autre moyen (K1) est présent pour dévier les signaux de compensation d'au moins une partie des signaux optiques réfléchis et les amener ensuite au moyen de traitement (O/E1, O/E2, 5).

2. Récepteur (EMP1) selon la revendication 1, **caractérisé en ce qu'**il est prévu une unité de transmission optique pour amener les signaux optiques transmis au moyen (DEK1) et **en ce que** l'autre moyen (K1) contient un appareil de couplage optique qui est intégré dans la ligne de transmission optique et qui est approprié pour déclencher les signaux optiques réfléchis dans le sens contraire au sens de propagation des signaux optiques transmis au moins partiellement à partir de la ligne de transmission optique.

3. Récepteur (EMP1) selon l'une quelconque des revendications précédentes, **caractérisé en ce que** le moyen (DEK1) contient un filtre optique périodique.

4. Récepteur (EMP1) selon l'une quelconque des revendications précédentes, **caractérisé en ce que** le moyen (DEK1) contient un filtre de Fabry-Perot.

5. Récepteur (EMP1) selon l'une quelconque des revendications précédentes, **caractérisé en ce que** le moyen de traitement (O/E1, O/E2, 5) contient un convertisseur optique/électrique (O/E1) pour la conversion des signaux optiques transmis en premiers signaux optiques, un second convertisseur optique/électrique (O/E2) pour la conversion des signaux de compensation optiques en seconds signaux électriques et un amplificateur différentiel (5) pour comparer les premiers et seconds signaux électriques entre eux.

6. Récepteur (EMP1) selon la revendication 2 ou 5,
**caractérisé en ce que** le facteur de déclenchement est défini de telle sorte que les niveaux de signal des premiers et seconds signaux électriques présentent en moyenne des valeurs identiques.

7. Récepteur (EMP1) selon l'une quelconque des revendications précédentes, **caractérisé en ce qu'**un isolateur (ISO) optique est prévu, lequel est intégré dans la ligne de transmission optique de telle sorte qu'il est transparent seulement pour les signaux optiques provenant du réseau de transmission optique (NET) et bloque les signaux réfléchis non déclenchés.
